# EUROPÄISCHE PATENTSCHRIFT

(11) **EP 2 140 391 B1**
(45) Veröffentlichungstag und Bekanntmachung des Hinweises auf die Patenterteilung: **17.02.2016**
(21) Anmeldenummer: 08749706.1
(22) Anmeldetag: 24.04.2008
(51) Int. Cl.: G06F 21/00

(54) **VERFAHREN UND SYSTEM ZUM AUTHENTIFIZIEREN EINES BENUTZERS**
METHOD AND SYSTEM FOR AUTHENTICATING A USER
PROCÉDÉ ET SYSTÈME D'AUTHENTIFICATION D'UN UTILISATEUR

(30) Priorität: 25.04.2007 DE 102007019541
(43) Veröffentlichungstag der Anmeldung: 06.01.2010
(60) Teilanmeldung: 12164453.8
(73) Patentinhaber: Wincor Nixdorf International GmbH, 33106 Paderborn (DE)
(72) Erfinder: BLUME, Marco, 33102 Paderborn (DE); NOLTE, Michael, 33034 Brakel (DE)
(86) Internationale Anmeldenummer: PCT/EP2008/054999
(87) Internationale Veröffentlichungsnummer: WO 2008/132129

(56) Entgegenhaltungen:
- US-A1- 2004 064 708
- US-A1- 2006 234 797
- US-B1- 6 968 459
- USB IMPLEMENTERS FORUM: "Universal Serial Bus Mass Storage Class" 19990930, 30. September 1999 (1999-09-30), XP002489594
- BALL E ET AL: "Role-based access control with X.509 attribute certificates" IEEE INTERNET COMPUTING, IEEE SERVICE CENTER, NEW YORK, NY, US, Bd. 7, Nr. 2, 1. März 2003 (2003-03-01), Seiten 62-69, XP011095972 ISSN: 1089-7801
- "Information technology - Open Systems Interconnection - The Directory: Public-key and attribute certificate frameworks; X.509 (08/05)" ITU-T STANDARD IN FORCE (I), INTERNATIONAL TELECOMMUNICATION UNION, GENEVA, CH, Nr. X.509 (08/05), 29. August 2005 (2005-08-29), XP017405086

## Beschreibung

Die Erfindung betrifft ein Verfahren und ein System zum Authentifizieren eines Benutzers bei einer Datenverarbeitungsanlage. Insbesondere dient die Erfindung zum Authentifizieren eines Benutzers an einem Geldmitteltransaktionsgerät. Bei Datenverarbeitungsanlagen, insbesondere bei Datenverarbeitungsanlagen, die Bestandteil eines Geldmitteltransaktionsgerätes sind, müssen eine Vielzahl von Sicherheitsaspekten berücksichtigt werden, um sicherzustellen, dass diese Datenverarbeitungsanlagen nicht von Unbefugten manipuliert werden können. Besonders die Übertragung von Daten, insbesondere von Programmdaten, von einem Wechseldatenträger zur Datenverarbeitungsanlage sowie von Daten von der Datenverarbeitungsanlage zu einem mit dieser Datenverarbeitungsanlage verbundenen Wechseldatenträger sollte bei unbefugten Benutzern sicher verhindert werden.

Bei Geldmitteltransaktionsgeräten ist eine solche Datenübertragung schon aus Sicherheitsgründen für dazu nicht befugte Benutzer zu unterbinden, um Datenschutzerfordernisse einzuhalten und Manipulationen zu unterbinden. Bekannte Geldmitteltransaktionsgeräte können insbesondere Selbstbedienungssysteme sein, die eine Vielzahl elektronischer Komponenten umfassen. Solche Komponenten sind beispielsweise in einer Geldausgabeeinheit, einer Tastatur, einem Kartenlese- und -schreibgerät sowie in weiteren Peripheriegeräten enthalten. Diese einzelnen Komponenten sind mit der Datenverarbeitungsanlage des Geldmitteltransaktionsgerätes über Kommunikationsschnittstellen und Datenleitungen verbunden. Jede dieser Komponente verarbeitet und erzeugt Daten, insbesondere Betriebsprotokolle, Tracedaten und Fehlerinformationen. Üblicherweise werden diese Daten in einen Speicherbereich eines Permanentspeichers der Datenverarbeitungsanlage, insbesondere eines Festplattenspeichers der Datenverarbeitungsanlage, gespeichert. Aus vielfältigen Gründen ist es sinnvoll, diese Daten auf einer weiteren Datenverarbeitungsanlage, insbesondere zentral beim Hersteller des Geldmitteltransaktionsgerätes zu verarbeiten und dabei zu analysieren. Eine Analyse dieser Daten kann beispielsweise auch auf einem Laptop-Computer eines Servicetechnikers mit geeigneter Software durchgeführt werden. Dabei kann es erforderlich sein, diese Daten mit Hilfe eines steckbaren Flashspeichers, wie einem Flashspeicher mit einer integrierten USB-Schnittstelle, einem sogenannten USB-Stick, von der Datenverarbeitungsanlage eines Geldmitteltransaktionsgerätes zu der weiteren Datenverarbeitungsanlage, wie dem Laptop-Computer des Servicetechnikers, zu übertragen. Dazu werden die relevanten Daten von der Datenverarbeitungsanlage des Geldmitteltransaktionsgerätes in einen Speicherbereich des steckbaren Flashspeichers kopiert oder bewegt. Jedoch ist eine solche Datenübertragung bei herkömmlichen Datenverarbeitungssystemen nicht gesichert, sodass jede Bedienperson, die Zugang zur Datenverarbeitungsanlage des Geldmitteltransaktionsgerätes hat, diese Daten kopieren kann. Dadurch kann eine missbräuchliche Nutzung dieser Daten nicht ausgeschlossen werden. Ferner sollte auch beim Übertragen von in einem Speicherbereich des steckbaren Flashspeichers gespeicherten Daten zur Datenverarbeitungsanlage des Geldmitteltransaktionsgerätes sichergestellt werden, dass diese Datenübertragung nur für autorisiert Benutzer gestattet ist. Gleiche Probleme treten auf, wenn anstelle des steckbaren Flashspeichers andere Wechseldatenträger genutzt werden. Auch zum Einräumen weiterer Benutzerrechte bei einer Datenverarbeitungsanlage ist eine sichere Authentifizierung eines Benutzers erforderlich, um diesem Benutzer voreingestellte Benutzerrechte einzuräumen. Diese Benutzerrechte können insbesondere das Ausführen von Anwendungsprogrammen, mit denen sicherheitsrelevante Einstellungen des Geldmitteltransaktionsgerätes geändert werden können oder die auf andere Art und Weise eine Manipulation des Geldmitteltransaktionsgerätes bewirken und/oder den sicheren Betrieb des Geldmitteltransaktionsgerätes beeinträchtigen können, verhindern.

Aus dem Dokument US 2004/064708 A1 sind Berechtigungsnachweise bekannt, sogenannte credentials, zum Erzeugen eines Benutzeraccounts auf einem Hostcomputer und in verschlüsselter und unverschlüsselter Version, auf einen sogenannten Token, beispielsweise einem USD-Memory-Key, zu speichern. Diese Berechtigungsnachweise können einen öffentlichen Schlüssel, eine oder mehrere Nutzerprivilegien, eine Gültigkeitsdauer für den mit Hilfe des Token erlaubten zu erzeugenden Account und andere Informationen enthalten.

Aus dem Dokument US 2006/234797 A1 ist bekannt, abhängig von dem eine Seriennummer einer Festplatte beinhaltenden Zertifikats zu überprüfen, ob eine installierte Festplatte diese Seriennummer hat und abhängig von der Übereinstimmung der Seriennummer des Zertifikats und der physikalischen Festplatte bestimmt wird, ob die Festplatte authentisch ist. Dadurch wird die Hardware des Systems überprüft, sodass Manipulationen an der Hardware detektiert werden können.

Aus dem Dokument USB IMPLEMENTERS FORUM: "Universal Serial Bus Mass Storage Class" ist eine Spezifikation zum Transport von Kommandos, Daten und Stati zwischen sogenannten "Bulk endpoints" bekannt, d. h. nicht zwischen Interrupt- oder Steuerendpunkten.

Aufgabe der Erfindung ist es, ein System und ein Verfahren zum Authentifizieren eines Benutzers anzugeben, durch die ein Benutzer einfach und sicher authentifiziert werden kann.

Diese Aufgabe wird durch ein System mit den Merkmalen des Patentanspruchs 1 und durch ein Verfahren mit den Merkmalen des Patentanspruchs 13 gelöst. Vorteilhafte Weiterbildungen der Erfindung sind in den abhängigen Patentansprüchen angegeben.

Durch ein System mit den Merkmalen des Patentanspruchs 1 und durch ein Verfahren mit den Merkmalen des Patentanspruchs 18 ist es auf einfache Art und Weise möglich einer Bedienperson, wie beispielsweise einem Servicetechniker, in der Datenverarbeitungsanlage voreingestellte Benutzerrechte zuzuweisen und die Bedienperson sicher als Benutzer dieser Benutzergruppe zu authentifizieren. Dadurch können nicht autorisierten Bedienpersonen insbesondere sicherheitsrelevante Bedienfunktionen nicht bereitgestellt werden. Durch die Verbindung eines Zertifikats mit dem Identifizierungscode zum Identifizieren des Wechselspeichermediums ist die Authentifizierung des Benutzers an das Vorhandensein des dem Zertifikat zugeordneten Wechselspeichermediums gebunden. Dies bietet eine relativ hohe Sicherheit beim Authentifizieren des Benutzers, sodass Zugriffe von unbefugten Benutzern auf sicherheitsrelevante Funktionen wirkungsvoll verhindert werden können. Als Wechselspeichermedium können übliche kostengünstige Wechseldatenträger, wie USB-Speichersticks und/oder Wechselfestplatten eingesetzt werden, die über die erforderlichen Identifizierungsinformationen verfügen. Das Wechselspeichermedium muss somit keinen Controller zum Ausführen eines Verwaltungsprozesses haben der digitale Zertifikate verwaltet, Zufallszahlen sowie Pseudozufallszahlen erzeugt und Verschlüsselungen von Zufallszahlen und Daten durchführt. Ein einfaches kostengünstiges Wechselspeichermedium ohne Kontroller, wie ein einfacher Massenspeicher, mit gespeicherten Identifikationsdaten und gespeichertem Zertifikat ist somit für die Erfindung ausreichend.

Bei einer Weiterbildung der Erfindung wird der Benutzer identifiziert und der identifizierte Benutzer authentifiziert, wobei für den Benutzer und/oder für eine Benutzergruppe, zu der der Benutzer zugeordnet ist, in der Datenverarbeitungsanlage Benutzerrechte voreingestellt sind, die durch das Authentifizieren des Benutzers für diesen Benutzer aktiviert werden. Dabei kann das Identifizieren des Benutzers ebenfalls mit Hilfe des Identifizierungscodes zum Identifizieren des Wechselspeichermediums und/oder mit Hilfe des digitalen Zertifikats, das in dem Speicherbereich des Wechselspeichermediums gespeichert ist, ermittelt werden.

Vorzugsweise ist das Zertifikat ein Attributzertifikat, wobei der Identifikationscode und/oder ein Passwort, das über eine Bedienoberfläche der Datenverarbeitungsanlage eingebbar ist, als Attribute dienen, die von einer Zertifizierungsstelle mit einem Zertifikat verbunden werden. Das Attributzertifikat verweist vorzugsweise auf das Attribut bzw. die Attribute und auf ein weiteres Zertifikat.

Ferner ist es vorteilhaft, im Speicherbereich des Wechselspeichermediums als Identifikationscode einen Herstelleridentifikationscode und einen Seriennummeridentifikationscode zu speichern. Der Herstelleridentifikationscode und der Seriennummeridentifikationscode sind vorzugsweise Attribute des Zertifikats.

Das Zertifikat hat vorzugsweise eine festgelegte Gültigkeitsdauer, wobei das Zertifikat mit Ablauf dieser Gültigkeitsdauer ungültig wird und von der Datenverarbeitungsanlage nicht mehr akzeptiert wird. Die Echtheit des Zertifikats sowie die Gültigkeit des Zertifikats können von der Datenverarbeitungsanlage geprüft werden, wobei nach einer erfolgreichen Prüfung der Benutzer authentifiziert wird. Dadurch kann insbesondere ein dauerhafter Missbrauch des Wechselspeichermediums zum Authentifizieren eines Benutzers wirkungsvoll vermieden werden.

Mit Hilfe des Zertifikats kann ein öffentlicher Schlüssel eines asymmetrischen Schlüsselpaars des Benutzers zertifiziert werden, mit dessen Hilfe Daten verschlüsselt werden, die mit dem privaten Schlüssel des Schlüsselpaares entschlüsselbar sind. Vorzugsweise werden Daten, die von der Datenverarbeitungsanlage zum Wechselspeichermedium übertragen werden, vor dem Übertragen mit Hilfe des zertifizierten öffentlichen Schlüssels verschlüsselt.

Die Datenverarbeitungsanlage ist bei einem bevorzugten Ausführungsbeispiel Bestandteil eines Geldmitteltransaktionsgerätes, wobei das Geldmitteltransaktionsgerät vorzugsweise ein Geldeinzahlautomat, ein Geldauszahlautomat, ein Geldrecyclingautomat, eine automatische Tresorkasse, ein automatisches Kassensystem und/oder ein Registrierkassensystem ist.

Das Wechselspeichermedium ist vorzugsweise eine externe Festplatte und/oder ein externer Flashspeicher, wobei das Wechselspeichermedium über eine Datenleitung und vorzugsweise über eine Standardschnittstelle mit der Datenverarbeitungsanlage verbindbar ist. Die Standardschnittstelle ist vorzugsweise eine USB-Schnittstelle und der Flashspeicher ist vorzugsweise eine Speicherkarte und/oder ein steckbarer USB-Speicher. Dadurch kann zum Authentifizieren des Benutzers ein Wechselspeichermedium genutzt werden, das einen ausreichend großen Speicherbereich aufweist, um auch große Datenmengen von der Datenverarbeitungsanlage auf das Wechselspeichermedium zu speichern als auch große Datenmengen vom Wechselspeichermedium zur Datenverarbeitungsanlage zu übertragen. Auf diese Weise lassen sich auch Daten zur Systemaktualisierung des Betriebssystems und/oder von Anwendungssoftware der Datenverarbeitungsanlage sicher übertragen.

Bei einer weiteren bevorzugten Ausführungsform der Erfindung ist erst nach einer erfolgreichen Authentifizierung des Benutzers das Übertragen von Daten von der Datenverarbeitungsanlage zum Wechselspeichermedium und/oder zum Übertragen von weiteren Daten vom Wechselspeichermedium zur Datenverarbeitungsanlage möglich. Dadurch kann die Datenübertragung verhindert werden, wenn keine Authentifizierung des Benutzers erfolgt ist, die die jeweilige Datenübertragung zulässt. Dadurch wird sowohl sichergestellt, dass sicherheitsrelevante Daten von der Datenverarbeitungsanlage nicht von nicht dazu autorisierten Bedienpersonen auf das Wechselspeichermedium übertragbar sind als auch dass ungewünschte Daten, insbesondere schädliche Programmcodes, wie Viren, nicht vom Wechselspeichermedium zur Datenverarbeitungsanlage übertragen werden.

Das Zertifikat kann bei einem Initialisierungsvorgang erstellt und in einem Speicherbereich des Wechseldatenträgers gespeichert werden. Vorzugsweise ist das Zertifikat nach einem Standard für digitale Zertifikate erstellt, insbesondere nach dem X.509 Standard. Dieser X.509 Standard liegt zum Zeitpunkt der Anmeldung in der Version 3 vor.

Der Identifikationscode bzw. die Identifikationscodes des Wechselspeichermediums werden durch den Hersteller in einem nachträglich nicht mehr veränderbaren Speicherbereich des Wechselspeichermediums, vorzugsweise bei dessen Herstellungsprozess, als nur lesbare Daten gespeichert. Das Zertifikat kann ebenfalls in einen solchen nicht mehr veränderbaren Speicherbereich als nur lesbare Daten oder alternativ vorzugsweise in einen weiteren wiederbeschreibbaren Speicherbereich des Wechselspeichermediums gespeichert werden, der wiederbeschreibbar ist und in dem weitere Daten speicherbar sind. Bei dieser bevorzugten Ausführungsform, bei der die Daten des Zertifikats in einem weiteren wiederbeschreibbaren Speicherbereich des Wechselspeichermediums gespeichert sind, kann das Zertifikat auf einfache Art und Weise erneuert werden, indem das bestehende Zertifikat gelöscht und durch ein neues Zertifikat ersetzt wird.

Das Attributzertifikat kann einen Benutzer zum Ausführen mindestens eines Anwendungsprogramms durch die Datenverarbeitungsanlage autorisieren. Dazu kann insbesondere das Anwendungsprogramm oder ein weiteres Programmmodul überprüfen, ob eine entsprechende Autorisierung des Benutzers durch eine erfindungsgemäße Authentifizierung des Benutzers erfolgt ist und/oder beim Start des Programms eine solche Authentifizierung des Benutzers zum Autorisieren veranlassen.

Durch die Erfindung können erst nach einer erfolgreichen Prüfung der Autorisierung der Bedienperson bzw. des angemeldeten Benutzers sicherheitsrelevante Funktionen einer Anwendungssoftware oder sicherheitsrelevante Anwendungssoftware aktiviert und/oder ausgeführt werden. Insgesamt wird durch die Erfindung der Datenschutz und die Datensicherheit erhöht.

Ein Verfahren zum Authentifizieren eines Benutzers kann in gleicher Weise weitergebildet werden, wie für das System zum Authentifizieren eines Benutzers insbesondere durch die Merkmale der unabhängigen Patentansprüche angegeben ist.

Weitere Merkmale und Vorteile der Erfindung ergeben sich aus der folgenden Beschreibung, welche in Verbindung mit den beigefügten Figuren die Erfindung anhand eines Ausführungsbeispiels näher erläutert.

Es zeigen:
- Figur 1: ein Blockdiagramm mit Komponenten zum Authentifizieren eines Benutzers;
- Figur 2: einen Ablauf zum Anfordern, Erzeugen und Speichern eines Zertifikats für einen Benutzer auf einem USB-Speicherstick; und
- Figur 3: einen Ablauf zum Verifizieren eines auf einem USB-Speicherstick gespeicherten Zertifikats.

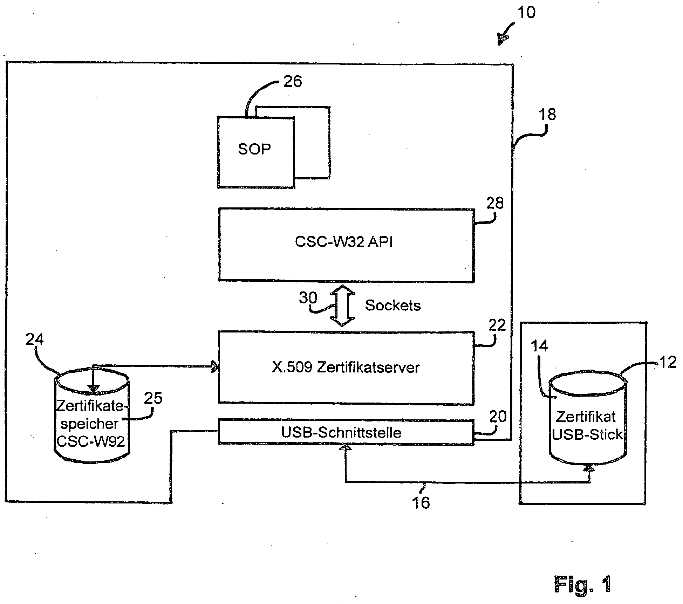

In Figur 1 ist ein Blockdiagramm eines Systems zum Authentifizieren eines Benutzers dargestellt, mit dessen Hilfe ein Servicetechniker als Benutzer der Benutzergruppe "Techniker" durch ein auf einem USB-Speicherstick 12 gespeichertes Zertifikat 14 von einer Datenverarbeitungsanlage authentifiziert werden kann. Der USB-Speicherstick 12 ist über eine Datenleitung 16 mit einer USB-Schnittstelle 20 der Datenverarbeitungsanlage 18 verbunden. Von der Datenverarbeitungsanlage 18 wird mit Hilfe eines Programmmoduls ein Zertifikatserver 22 nach dem Zertifikatstandard X.509 bereitgestellt. Der Zertifikatserver 22 hat Zugriff auf einen Permanentspeicherbereich 24, wie z. B. einen Festplattenspeicherbereich, in dem Zertifikate 25 gespeichert sind. Mit Hilfe der Zertifikate 25 können verschiedene auf unterschiedlichen USB-Speichersticks, USB-Festplatten oder anderen USB-Wechselspeichermedien gespeicherte Zertifikate überprüft werden. Insbesondere enthält der Permanentspeicherbereich 24 mindestens ein Zertifikat 25, auf das das im USB-Speicherstick 12 gespeicherte Zertifikat 14 verweist.

Der Servicetechniker startet über eine grafische Bedienoberfläche mindestens ein Service- und Operatinganwendungsprogramm 26. Dieses Service- und Operatinganwendungsprogramm 26 übergibt eine definierte Anfrage in Form eines Textfeldes an ein CSC-W32 API-Programmmodul 28, dass eine Anwendungsschnittstelle für das Service- und Operatinganwendungsprogramm 26 und weitere Programme bereitstellt. Das CSC-W32 API-Programmmodul 28 ist ein Client, der über mindestens eine Socketverbindung 30 Dienste des X.509-Zertifikatservers 22 in Anspruch nimmt. Das CSC-W32 API-Programmmodul 28 leitet die Anfrage des Service- und Operatinganwendungsprogramms 26 an den Zertifikatserver 22 als Anfrage weiter.

Aufgrund dieser Anfrage überprüft der Zertifikatserver 22, ob der angemeldete aktuelle Benutzer als Benutzer der Benutzergruppe "Techniker" authentifiziert werden kann, indem der Zertifikatserver 22 mit Hilfe der im Permanentspeicherbereich 24 gespeicherten Zertifikate 25 überprüft, ob das Zertifikat 14 des mit der USB-Schnittstelle 20 der Datenverarbeitungsanlage 18 verbundenen USB-Speichersticks 12 gültig ist und den Benutzer tatsächlich als gültigen Benutzer der Benutzergruppe "Techniker" authentifiziert. Ergibt die Überprüfung des Zertifikatservers 22, dass das Zertifikat 14 in Verbindung mit der Seriennummer des USB-Speichersticks 12 und optional einem Passwort, dass der Servicetechniker über eine Benutzeroberfläche der Datenverarbeitungsanlage 18 eingegeben hat, authentifiziert, teilt der Zertifikatserver 22 dem CSC-W32 API-Programmmodul 28 mit, dass die Authentifizierung des Benutzers erfolgreich war und das Service- und Operatinganwendungsprogramm 26 weiter abgearbeitet werden kann bzw. eine von diesem Service- und Operatinganwendungsprogramm 26 bereitgestellte sicherheitsrelevante Funktion aktiviert werden kann. Bei einem ungültigen Zertifikat 14 bzw. bei einer nicht erfolgreichen Authentifizierung des Benutzers erzeugt der Zertifikatserver 22 eine entsprechende Antwort auf die Anfrage des CSC-W32 API-Programmmoduls 28, wodurch eine weitere Abarbeitung des Service- und Operatinganwendungsprogramms 26 bzw. das Bereitstellen einer sicherheitsrelevanten Funktion, das bzw. die die Überprüfung veranlasst hat, nicht aktiviert wird.

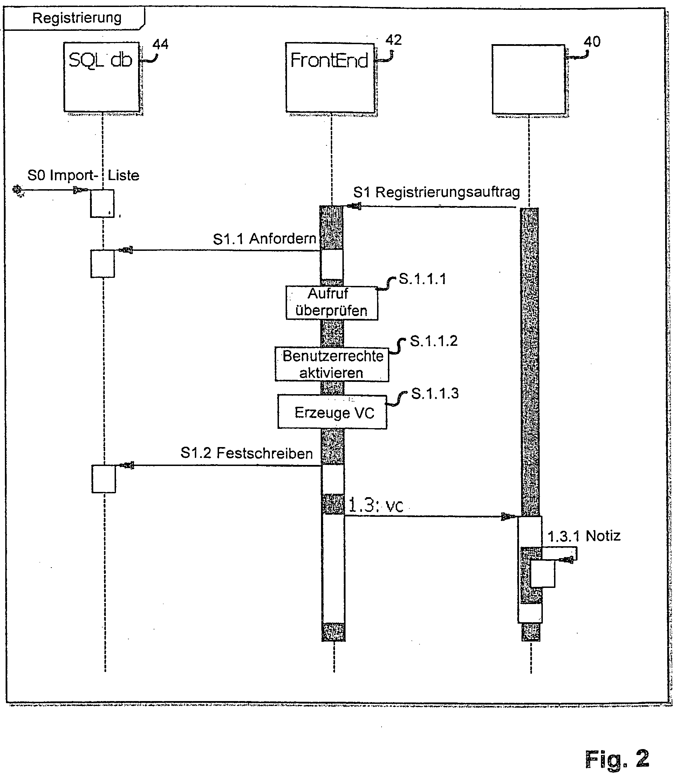

In Figur 2 ist ein Ablauf zum Anfordern, Erzeugen und Speichern eines Zertifikats 14 für einen Benutzer zum Personalisieren und Aktivieren des USB-Speichersticks 12 beispielhaft dargestellt. Gleiche Elemente haben gleiche Bezugszeichen. Wie bereits im Zusammenhang mit Figur 1 beschrieben, dient das Zertifikat 14 zum Authentifizieren eines Benutzers durch die Datenverarbeitungsanlage 18 sowie durch weitere Datenverarbeitungsanlagen. Der USB-Speicherstick 12 wird mit Hilfe einer Client-Server-Applikation.für einen speziellen Benutzer, beispielsweise für den bereits erwähnten Servicetechniker, personalisiert. In einem nicht dargestellten Vorverarbeitungsschritt muss eine Beantragung der Registrierung bei einer Registrierungsstelle erfolgen. Die Registrierungsstelle kann beispielsweise vom Hersteller des Geldmitteltransaktionsgerätes bereitgestellt werden, in dem die Datenverarbeitungsanlage 18 enthalten ist.

Die Beantragung der Registrierung wird von der Zertifizierungsstelle manuell durch administrative Tätigkeit abgearbeitet und ist mit dem Freischalten eines neuen Benutzers in einem Netzwerk vergleichbar. Der Antragsteller wird dabei als Benutzer in einer Datenbank registriert. Der Antragsteller stellt den Antrag beispielsweise per E-Mail oder per Telefon. Alternativ kann der Antrag automatisch von einem Programmmodul erzeugt werden, wenn ein Servicetechniker eingestellt worden ist und/oder ein Servicetechniker oder ein anderer Benutzer neu registriert worden ist, für den eine Autorisierung zum Aktivieren von Service- und Operatinganwendungsprogrammen und/oder anderen sicherheitsrelevanten Programmen und/oder Funktionen erfolgen soll. Daraufhin wird dieser Antrag zum Zertifizieren geprüft. Erforderlichenfalls erfolgt ein telefonischer Rückruf oder eine Kommunikation per E-Mail, um sicherzustellen, dass die Anfrage tatsächlich vom betreffenden Servicetechniker kommt. Anschließend wird überprüft, ob dem Antragsteller, d. h. dem Servicetechniker, die gewünschten Benutzerrechte zugeteilt werden können. Alternativ oder zusätzlich werden aufgrund der Stellung des Servicetechnikers im Unternehmen und seiner Funktion automatisch geeignete Benutzerrechte festgelegt, die dem Servicetechniker dann zugewiesen und durch ein Zertifikat bestätigt werden. Dem Servicetechniker werden vorzugsweise die allgemeinen Benutzerrechte der voreingestellten Benutzergruppe "Techniker" und erforderlichenfalls weitere Benutzerrechte zugewiesen.

Wird bei der Prüfung des Antrags festgestellt, dass diesem Antrag des Antragstellers stattgegeben wird und ihm entsprechende Nutzungsrechte zugewiesen werden sollen, so wird ein Stammdatensatz in einer Datenbank angelegt und ein für die Zertifizierung erforderlicher Zertifizierungsprozess durch einen Datenbankeintrag freigeschaltet. Sowohl der Stammdatensatz als auch der Zertifizierungsprozess können auch zum Erzeugen weiterer Zertifikate für den betreffenden Servicetechniker genutzt werden.

In Figur 2 ist der Kommunikationsablauf zwischen einer Kommunikationseinrichtung 40 des Servicetechnikers, dem als Frontend 42 dienenden Callcenters der Zertifizierungsstelle und einer Datenbank 44 zum Registrieren von zu zertifizierenden und zertifizierten Benutzern dargestellt. In Schritt S0 werden der Datenbank Identifizierungsinformationen von vorzugsweise mehreren Technikern übergeben, die in eine in einer Datei gespeicherte Liste mit diesen dem jeweiligen Techniker zugeordneten Informationen umfassen. Mit Hilfe dieser Identifizierungsinformationen können die Servicetechniker identifiziert werden, für die ein Zertifikat 14 ausgestellt werden darf. Diese Liste kann beispielsweise in Form einer mit dem Softwareprogramm Microsoft Excel erstellten Tabelle gespeichert und von der Datenbank 44 importiert werden.

Im Schritt S1 erfolgt eine Anforderung des Servicetechnikers, mit der er einen Antrag auf Zertifizierung stellt und eine gewünschte bzw. mit Hilfe der Identifizierungsdaten voreingestellte Benutzerrolle beantragt. Die Benutzerrolle korrespondiert mit den für eine Benutzergruppe zugewiesenen Benutzerrechten, wenn der Servicetechniker Mitglied der Gruppe werden soll. Allgemein korrespondiert die Benutzerrolle mit den dem jeweiligen Benutzer (Servicetechniker) zugewiesenen Benutzerrechten. Die Datenbank 44 erzeugt für jeden Listeneintrag der importierten Liste, d. h. für jeden zu registrierenden Benutzer, einen separaten Datensatz. Im Schritt S1.1 wird vom Frontend 42 eine Anforderung an die Datenbank 44 gestellt, der Datensatz für den Servicetechniker angefordert und aus der Datenbank ausgelesen.

Die Authentizität des Servicetechnikers wird beispielsweise durch die Abfrage eines Authenifizierungscodes wie z. B. seines Geburtstags, im Schritt S1.1.1 festgestellt. Ferner werden die dem Servicetechniker zugewiesenen Berechtigungen im Schritt S1.1.2 aktiviert. Dann wird vom Frontend 42 ein Verifikationscode (vc) erzeugt. Dieser Verifikationscode wird in den Datensatz des Servicetechnikers in der Datenbank 44 eingetragen. Der Verifikationscode kann beispielsweise ein kryptografischer Wert sein, der über den Datensatz des Servicetechnikers gebildet ist. Anschließend wird im Schritt S1.2 der Datensatz und/oder die geänderten Daten des Datensatzes in die Datenbank 44 geschrieben. Im Schritt S1.3 wird dem Servicetechniker der Verifikationscode übermittelt. Dies kann beispielsweise per Telefon oder per Datenübertragung, insbesondere per E-Mail, erfolgen. Alternativ kann ihm der Verifikationscode auch postalisch zugestellt werden. Dieser Verifikationscode wird zu einem späteren Zeitpunkt zur weiteren Authetifikation des Benutzers benötigt, insbesondere um zu einem späteren Zeitpunkt ein oder mehrere Zertifikate anzufordern. Im Schritt S1.3.1 notiert sich der Servicetechniker der Verifikationscode bzw. speichert ihn zur weiteren Verfügung.

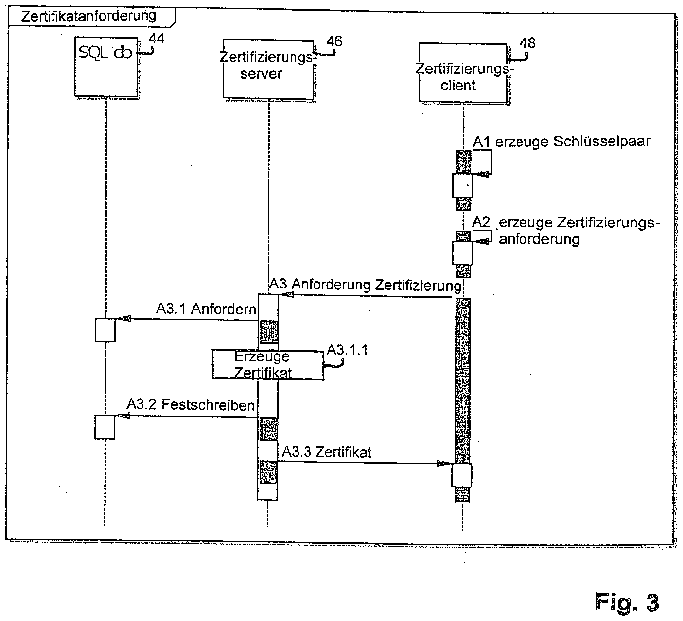

In Figur 3 ist ein Ablauf zum Erzeugen und Übermitteln eines Nutzerzertifikats dargestellt. Ein Zertifizierungsclientanwendungsprogramm 48 wird beispielsweise auf einem Desktop-PC oder einem Notebook-Computer ausgeführt, mit dessen Hilfe ein Zertifikat bei einem Zertifizierungsserver 46 angefordert wird. Das Clientanwendungsprogramm kann beispielsweise über ein Netzwerk, wie ein Intranet oder das Internet, zum Desktop-Computer oder Notebook-Computer übertragen werden, mit dessen Hilfe das Zertifikat angefordert wird. Auf diesem Computer wird das Clientanwendungsprogramm ausgeführt. Erforderlichenfalls wird das Clientanwendungsprogramm vor dem Ausführen auf dem Computer installiert und bei den notwenigen Komponenten des Betriebssystems entsprechend registriert. Ein solches Clientanwendungsprogramm hat vorzugsweise folgende Funktionen:
- Erzeugen eines RSA-Schlüsselpaares
- Personalisieren eines Wechselspeichermediums
- eine weitere Funktion zum Nachpersonalisieren
- Passwort ändern.

Beispielsweise kann das Clientanwendungsprogramm auch eine browserbasierte und/oder eine plattformunabhängige Java-Applikation sein.

Der Zertifizierungsserver 46 ist über eine Datenverbindung mit der Datenbank 44 verbunden. Der Zertifizierungsserver 46 und die Datenbank 44 können durch verschiedene Softwareapplikationen auch mit Hilfe einer einzigen Datenverarbeitungsanlage bereitgestellt werden.

Im Schritt A1 wird durch das Clientanwendungsprogramm ein Schlüsselpaar für den Servicetechniker erzeugt. Anschließend erzeugt das Clientanwendungsprogramm 48 im Schritt A2 eine Zertifizierungsanforderung. Zum Erzeugen der Anfrage wird ein Wechselspeichermedium, vorzugsweise ein USB-Speicherstick 12 des Servicetechnikers mit der Datenverarbeitungsanlage verbunden, die das Zertifizierungsclientanwendungsprogramm 48 abarbeitet. Das Zertifizierungsclientanwendungsprogramm 48 liest die Seriennummer und vorzugsweise die Hersteller-ID des Wechselspeichermediums aus und integriert diese in die Zertifizierungsanforderung. Ferner legt der Servicetechniker ein Passwort fest, das ebenfalls in die Serviceanforderung integriert wird. Diese Zertifizierungsanforderung wird im Schritt A3 vom Zertifizierungsclientanwendungsprogramm 48 zum Zertifizierungsserver 46 übertragen, der den Datensatz für den Techniker, für den das Zertifikat erstellt werden soll lädt. Ausgehend von den zum Servicetechniker in der Datenbank 44 gespeicherten Informationen wird im Schritt A3.1.1 vom Zertifikatserver 46 ein Zertifikat 14 entsprechend den für diesen Servicetechniker in der Datenbank 44 gespeicherten Berechtigungsinformationen erzeugt. Der Zertifizierungsserver 46 erzeugt im Schritt A3.1.1 ein Attributzertifikat, wobei die Seriennummer, der Hersteller-ID-Code des USB-Speichersticks, das Passwort und/oder biometrische Daten des Servicetechnikers als Attribute zum Erzeugen des Attributzertifikats dienen. Das erzeugte Attributzertifikat legt die Benutzerberechtigungen des Servicetechnikers auf einer Datenverarbeitungsanlage fest, wie beispielsweise auf der Datenverarbeitungsanlage, die das Clientzertifizierungsprogramm 48 abarbeitet oder auf der Datenverarbeitungsanlage des Geldmitteltransaktionsgerätes. Ferner können durch die Nutzungsrechte die Berechtigung zum Starten und Ausführen bestimmter Anwendungsprogramme und/oder sicherheitsrelevanter Funktionen dienen, wie bereits im Zusammenhang mit Figur 1 ausführlich erläutert.

Vorzugsweise umfasst die Zertifikatsanforderung auch den Verifikationscode, der dem Techniker zuvor, wie in Verbindung mit Figur 2 beschrieben, übermittelt worden ist. Alternativ kann dieser Verifikationscode in einer gesonderten Kommunikation zwischen Zertifizierungsclientanwendungsprogramm 48 und Zertifizierungsserver 46 übermittelt werden. Im Schritt A3.2. wird ein Vermerk in den Datensatz des Servicetechnikers in die Datenbank 44 geschrieben, dass ein entsprechendes Zertifikat erzeugt worden ist. Vorzugsweise wird der gesamte Datensatz des Servicetechnikers neu in die Datenbank 44 geschrieben.

Im Schritt A3.3 wird das erzeugte Zertifikat von dem Zertifizierungsserver 46 zum Zertifizierungsclientanwendungsprogramm 48 übertragen. Das Zertifikat wird vom Zertifizierungsclient 48 in einen Speicherbereich des USB-Speichersticks 12 geschrieben, der mit einer USB-Schnittstelle der Datenverarbeitungsanlage verbunden ist, die das Zertifizierungsclientanwendungsprogramm 48 abarbeitet. Das Attributzertifikat hat vorzugsweise ein Ablaufdatum, dass in dem im Schritt A3.1.1 erzeugten Zertifikat enthalten ist.

In der Datenbank 44 werden nach dem Erzeugen des Zertifikats Informationen des Antragstellers, d. h. des Servicetechnikers, zugelassene Benutzerrechte bzw. Benutzerrollen, das Zertifikat selbst, die Seriennummer des USB-Speichersticks 12 und/oder der aktuelle Status des Zertifikats gespeichert. Der Status kann beispielsweise "beantragt", "ausgestellt" oder "zurückgezogen" sein. Sowohl die Zertifizierungsclientapplikation 48 als auch die Zertifizierungsserverapplikation 46 können grafische Benutzeroberflächen aufweisen. Der Server hat weiterhin folgende Funktionen:
- Administration eines Schlüsselspeichers und mindestens eines Route-Zertifikates
- Administration von Benutzern
- Verarbeitung von Zertifikatsanfragen
- Protokollierung von Zertifizierungsvorgängen in der Datenbank 44.

Vorzugsweise wird mit der Anforderung des Zertifikats oder in einer gesonderten Kommunikation zumindest der öffentliche Schlüssel des im Schritt A1 erzeugten Schlüsselpaars zum Zertifizierungsserver 42 übertragen. Der übertragene Schlüssel selbst kann dem Benutzer zugeordnet oder in einem Schlüsselspeicher der Datenbank 44 oder in einem Speicherbereich des Zertifizierungsservers 46 gespeichert werden.

Das Service- und Operatinganwendungsprogramm 26 der Datenverarbeitungsanlage 18 kann Funktionen bereitstellen, die nur dann ausgeführt werden können, wenn ein Benutzer authentifiziert wird, dem dafür erforderliche Benutzerrechte, also eine spezielle Benutzerrolle zugeordnet ist.

Das Wechselspeichermedium kann vorzugsweise auch verwendet werden, um die durch die Datenverarbeitungsanlage 18 erzeugten Log- und Tracedaten automatisch als so genanntes Bündel abzuholen. Dadurch kann sichergestellt werden, dass alle erforderlichen Log- und Tracedateien zu Auswertungszwecken auf das Wechselspeichermedium kopiert worden sind. Die Berechtigung zum Kopieren und der Kopiervorgang selbst kann automatisch mit Hilfe des auf dem Wechselspeichermedium gespeicherten Zertifikats sowie den Identifizierungsinformationen des Wechselspeichermediums überprüft und angestoßen werden.

Insbesondere werden Schreib- und Lesezugriffe auf das Wechselspeichermedium nur dann gestattet, wenn auf dem Wechselspeichermedium ein gültiges Zertifikat gespeichert ist, das einen Benutzer authentifiziert, der eine solche Schreib- und Leseberechtigung hat. Aus Sicherheitsgründen kann eine andere Schreib- und Lesemöglichkeit von und auf Wechselspeichermedien nicht zugelassen werden.

Ferner können auf dem Wechselspeichermedium Programmdaten von Service- und Anwendungsprogrammen gespeichert sein, die vorzugsweise nur dann von der Datenverarbeitungsanlage 18 ausgeführt werden können, wenn auf dem Wechselspeichermedium ein gültiges Zertifikat gespeichert ist, das zusammen mit den Identifizierungsinformationen des Wechselspeichermediums eine Berechtigung für diese Schreib- und Lesezugriffe bestätigt.

Sollen Daten auf dem Wechselspeichermedium gespeichert werden, werden diese vorzugsweise komprimiert und/oder in einer geschützten Datei gespeichert. Vorzugsweise werden die Daten mit Hilfe eines öffentlichen Schlüssels eines RSA-Schlüsselpaares verschlüsselt gespeichert.

Im Dateinamen der gespeicherten Datei kann vorzugsweise eine Seriennummer eines Geldmitteltransaktionsgerätes, in dem die Datenverarbeitungsanlage 18 angeordnet ist, enthalten sein. Die Datenverarbeitungsanlage 18 kann insbesondere ein geeigneter Personalcomputer und/oder eine geeignete Steuereinheit sein

Die Datenbank 44 ist vorzugsweise eine SQL-Datenbank, in der für jeden zu zertifizierenden und/oder zertifizierten Benutzer Name, Anschrift, Firma, Abteilung, Telefonnummer, E-Mail-Adresse, Seriennummer des Wechselspeichermediums, vergebene Zertifikate, Gültigkeit der Zertifikate, Bearbeiter, Datum und Status gespeichert sind. Vorzugsweise wird auch die Historie einzelner Daten erfasst, sodass Änderungen auch zu einem späteren Zeitpunkt nachvollzogen werden können. Die Datenbank 44 und/oder der Zertifizierungsserver 46 erzeugt bei folgenden Ereignissen eine Information, insbesondere schickt die Datenbank 44 und/oder der Zertifizierungsserver 46 automatisiert eine E-Mail:
- an die Zertifizierungsstelle über eingehende Anträge;
- an den Antragsteller nach Freischaltung des Antrags zur Aufforderung, die Zertifikate abzuholen;
- an den Antragsteller vor Ablauf einzelner Zertifikate als Hinweise zur Beantragung einer Verlängerung und/oder eines neuen Zertifikats und
- an den Antragsteller, wenn neue und/oder verlängerte Zertifikate vorliegen.

Durch die Verknüpfung der Seriennummer des Wechselspeichermediums, der Hersteller-ID des Wechselspeichermediums und/oder eines frei wählbaren Passworts in einem Standard X.509 Attributzertifikat können Standardwechselspeichermedien, wie USB-Wechselspeichermedien, zum Authentifizieren eines Benutzers genutzt werden, die relativ preiswert sind. Mit Hilfe dieser Benutzerauthentifizierung können Datenschutz und Datensicherheit erhöht werden.

## Patentansprüche

1. System zum Authentifizieren eines Benutzers,
mit einem Wechselspeichermedium (12), das mindestens einen Speicherbereich aufweist, in dem Identifizierungsdaten zum Identifizieren des Wechselspeichermediums (12) gespeichert sind, wobei in diesem Speicherbereich oder in einem weiteren Speicherbereich des Wechselspeichermediums (12) Daten eines digitalen Zertifikats (14) gespeichert sind, und
mit einer Datenverarbeitungsanlage (18), mit der das Wechselspeichermedium (12) über eine Datenübertragungsverbindung verbunden ist, **dadurch gekennzeichnet,**
**dass** die Identifizierungsdaten und die Daten des digitalen Zertifikats (14) vom Wechselspeichermedium (12) zur Datenverarbeitungsanlage (18) übertragen werden, und
**dass** die Datenverarbeitungsanlage (18) die Identifizierungsdaten und die Daten des digitalen Zertifikats verarbeitet und den Benutzer authentifiziert,
**dass** erst nach einer erfolgreichen Authentifizierung des Benutzers das Übertragen von Daten von der Datenverarbeitungsanlage (18) zum Wechselspeichermedium (12) und/oder das Übertragen von weiteren Daten vom Wechselspeichermedium (12) zur Datenverarbeitungsanlage (18) ermöglicht werden, und
**dass** mit Hilfe des Zertifikats (14) ein öffentlicher Schlüssel eines asymmetrischen Schlüsselpaars des Benutzers zertifziert ist, mit dessen Hilfe Daten verschlüsselt werden, die mit dem privaten Schlüssel des Schlüsselpaars entschlüsselbar sind, wobei Daten von der Datenverarbeitungsanlage(18) zum Wechselspeichermedium (12) mit Hilfe des zertifizierten öffentlichen Schlüssels verschlüsselt übertragen werden.

2. System nach Anspruch 1, **dadurch gekennzeichnet, dass** der Benutzer identifiziert und der identifizierte Benutzer authentifiziert wird, und dass für den Benutzer und/oder eine Benutzergruppe, zu der der Benutzer zugeordnet ist, Rechte voreingestellt sind, die durch das Authentifizieren des Benutzers für diesen Benutzer aktiviert werden.

3. System nach einem der vorhergehenden Ansprüche,
**dadurch gekennzeichnet, dass** der Benutzer durch die Eingabe eines Benutzernamens, durch die Seriennummer des Wechseldatenträgers (12) und/oder das Zertifikat (14) identifiziert wird.

4. System nach einem der vorhergehenden Ansprüche,
**dadurch gekennzeichnet, dass** das Zertifikat (14) ein Attributzertifikat ist, wobei die Identifizierungsdaten und/oder ein Passwort als Attribute dienen, die von einer Zertifizierungsstelle (44, 46) mit einem Zertifikat (14) verbunden werden, wobei das Attributzertifikat vorzugsweise auf das Attribut bzw. die Attribute und auf ein weiteres Zertifikat verweist.

5. System nach einem der vorhergehenden Ansprüche,
**dadurch gekennzeichnet, dass** die Datenverarbeitungsanlage (18) die Gültigkeit und/oder Echtheit des Zertifikats (14) prüft.

6. System nach einem der vorhergehenden Ansprüche,
**dadurch gekennzeichnet, dass** im Speicherbereich des Wechselspeichermediums (12) als Identifizierungsdaten Herstelleridentifikationsdaten und ein Seriennummerinformationscode gespeichert sind, wobei die Herstelleridentifikationsdaten und der Seriennummerinformationscode vorzugsweise Attribute des Zertifikats (14) sind.

7. System nach einem der vorhergehenden Ansprüche,
**dadurch gekennzeichnet, dass** die Datenverarbeitungsanlage (18) Bestandteil eines Geldmitteltransaktionsgerätes ist, wobei das Geldmitteltransaktionsgerät vorzugsweise ein Geldeinzahlautomat, ein Geldauszahlautomat, ein Geldrecyclingautomat, ein automatisches Kassensystem und/oder ein Registrierkassensystem ist.

8. System nach einem der vorhergehenden Ansprüche,
**dadurch gekennzeichnet, dass** das Zertifikat (14) eine festgelegte Gültigkeitsdauer hat und dass das Zertifikat (14) mit Ablauf der Gültigkeitsdauer ungültig wird und von der Datenverarbeitungsanlage (18) nicht mehr akzeptiert wird.

9. System nach einem der vorhergehenden Ansprüche,
**dadurch gekennzeichnet, dass** das Wechselspeichermedium (12) eine externe Festplatte und/oder ein externer Flashspeicher ist, wobei das Wechselspeichermedium (12) über eine Datenleitung, vorzugsweise über eine Standardschnittstelle (20), mit der Datenverarbeitungsanlage (18) verbindbar ist, wobei die Standardschnittstelle (20) vorzugsweise eine USB-Schnittstelle und der Flashspeicher vorzugsweise eine Speicherkarte und/oder ein steckbarer USB-Speicher ist.

10. System nach einem der vorhergehenden Ansprüche,
**dadurch gekennzeichnet, dass** die Identifizierungsdaten durch den Hersteller in einen nachträglich nicht mehr veränderbaren Speicherbereich des Wechselspeichermediums (12), vorzugsweise beim dessen Herstellungsprozess, als nur lesbare Daten gespeichert werden, und dass die Daten des Zertifikats in einem weiteren wie-derbeschreibbaren Speicherbereich des Wechselspeichermediums (12) gespeichert sind, in dem weitere Daten speicherbar sind.

11. System nach einem der vorhergehenden Ansprüche,
**dadurch gekennzeichnet, dass** die Datenverarbeitungsanlage (18) prüft, ob der Benutzer zum Aktivieren einer durch ein Programm der Datenverarbeitungsanlage (18) bereitgestellten Funktion autorisiert ist und erst nach einer erfolgreichen Überprüfung die Funktion durch die Datenverarbeitungsanlage (18) aktiviert und/oder ausgeführt wird.

12. System nach einem der vorhergehenden Ansprüche,
**dadurch gekennzeichnet, dass** eine Registrierungsinstanz eine Anfrage nach einem Zertifikat verarbeitet und die Anfrage prüft, wobei nach positiver Prüfung ein Prozess zur Zertifizierung gestattet wird.

13. Verfahren zum Authentifizieren eines Benutzers,
bei dem in mindestens einem Speicherbereich eines Wechselspeichermediums (12) Identifizierungsdaten zum Identifizieren des Wechselspeichermediums (12) gespeichert sind, und
bei dem in dem Speicherbereich oder in einem weiteren Speicherbereich des Wechselspeichermediums (12) Daten eines digitalen Zertifikats (14) gespeichert sind, **dadurch gekennzeichnet,**
**dass** die Identifizierungsdaten und die Daten des digitalen Zertifikats aus dem Speicherbereich des Wechselspeichermediums (12) ausgelesen und über eine Datenübertragungsverbindung zu einer Datenverarbeitungsanlage (18) übertragen werden,
**dass** mit Hilfe der Datenverarbeitungsanlage (18) die Identifizierungsdaten und die Daten des digitalen Zertifikats (14) verarbeitet und zum Authentifizieren des Benutzers genutzt werden,
**dass** erst nach einer erfolgreichen Authentifizierung des Benutzers das Übertragen von Daten von der Datenverarbeitungsanlage (18) zum Wechselspeichermedium (12) und/oder das Übertragen von weiteren Daten vom Wechselspeichermedium (12) zur Datenverarbeitungsanlage (18) ermöglicht werden, und
**dass** mit Hilfe des Zertifikats (14) ein öffentlicher Schlüssel eines asymmetrischen Schlüsselpaars des Benutzers zertifziert ist, mit dessen Hilfe Daten verschlüsselt werden, die mit dem privaten Schlüssel des Schlüsselpaars entschlüsselbar sind, wobei Daten von der Datenverarbeitungsanlage(18) zum Wechselspeichermedium (12) mit Hilfe des zertifizierten öffentlichen Schlüssels verschlüsselt übertragen werden.

## Claims

1. System for authenticating a user,
having a removable storage medium (12) having at least one memory area which stores identifying data for identifying the removable storage medium (12), this memory area or a further memory area of the removable storage medium (12) storing data relating to a digital certificate (14), and
having a data processing system (18) to which the removable storage medium (12) is connected via a data transmission connection, **characterized**
**in that** the identifying data and the data relating to the digital certificate (14) are transmitted from the removable storage medium (12) to the data processing system (18), and
**in that** the data processing system (18) processes the identifying data and the data relating to the digital certificate and authenticates the user,
**in that** data can be transmitted from the data processing system (18) to the removable storage medium (12) and/or further data can be transmitted from the removable storage medium (12) to the data processing system (18) only after successful authentication of the user, and
**in that** the certificate (14) is used to certify a public key of an asymmetrical key pair belonging to the user, which public key is used to encrypt data which can be decrypted using the private key of the key pair, data being transmitted from the data processing system (18) to the removable storage medium (12) in encrypted form with the aid of the certified public key.

2. System according to Claim 1, **characterized in that** the user is identified and the identified user is authenticated, and **in that** rights are preset for the user and/or a group of users to which the user is assigned, which rights are activated for this user by authenticating the user.

3. System according to one of the preceding claims, **characterized in that** the user is identified by inputting a user name, by the serial number of the removable data storage medium (12) and/or by the certificate (14).

4. System according to one of the preceding claims, **characterized in that** the certificate (14) is an attribute certificate, the identifying data and/or a password being used as attributes which are associated with a certificate (14) by a certification authority (44, 46), the attribute certificate preferably referring to the attribute(s) and to a further certificate.

5. System according to one of the preceding claims, **characterized in that** the data processing system (18) checks the validity and/or authenticity of the certificate (14).

6. System according to one of the preceding claims, **characterized in that** the memory area of the removable storage medium (12) stores manufacturer identification data and a serial number information code as identifying data, the manufacturer identification data and the serial number information code preferably being attributes of the certificate (14).

7. System according to one of the preceding claims, **characterized in that** the data processing system (18) is part of a funds transaction device, the funds transaction device preferably being a cash deposit machine, a cash withdrawal machine, a cash recycling machine, an automatic point of sales system and/or a cash register system.

8. System according to one of the preceding claims, **characterized in that** the certificate (14) has a defined validity period, and **in that** the certificate (14) becomes invalid and is no longer accepted by the data processing system (18) with expiry of the validity period.

9. System according to one of the preceding claims, **characterized in that** the removable storage medium (12) is an external hard disk and/or an external flash memory, the removable storage medium (12) being able to be connected to the data processing system (18) via a data line, preferably via a standard interface (20), the standard interface (20) preferably being a USB interface and the flash memory preferably being a memory card and/or a plug-in USB memory.

10. System according to one of the preceding claims, **characterized in that** the identifying data are stored by the manufacturer as read-only data in a memory area of the removable storage medium (12) which can no longer be subsequently changed, preferably during the process of manufacturing the removable storage medium, and **in that** the data relating to the certificate are stored in a further, rewritable memory area of the removable storage medium (12) in which further data can be stored.

11. System according to one of the preceding claims, **characterized in that** the data processing system (18) checks whether the user is authorized to activate a function provided by a program of the data processing system (18), and the function is activated and/or performed by the data processing system (18) only after a successful check.

12. System according to one of the preceding claims, **characterized in that** a registration entity processes a request for a certificate and checks the request, a certification process being allowed after a positive check.

13. Method for authenticating a user,
in which at least one memory area of a removable storage medium (12) stores identifying data for identifying the removable storage medium (12), and
in which the memory area or a further memory area of the removable storage medium (12) stores data relating to a digital certificate (14), **characterized**
**in that** the identifying data and the data relating to the digital certificate are read from the memory area of the removable storage medium (12) and are transmitted to a data processing system (18) via a data transmission connection,
**in that** the identifying data and the data relating to the digital certificate (14) are processed with the aid of the data processing system (18) and are used to authenticate the user,
**in that** data can be transmitted from the data processing system (18) to the removable storage medium (12) and/or further data can be transmitted from the removable storage medium (12) to the data processing system (18) only after successful authentication of the user, and
**in that** the certificate (14) is used to certify a public key of an asymmetrical key pair belonging to the user, which public key is used to encrypt data which can be decrypted using the private key of the key pair, data being transmitted from the data processing system (18) to the removable storage medium (12) in encrypted form with the aid of the certified public key.

## Revendications

1. Système d'authentification d'un utilisateur comportant un support d'enregistrement amovible (12) qui comprend au moins une zone de mémoire dans laquelle sont stockées des données d'identification destinées à identifier le support d'enregistrement amovible (12) dans lequel des données d'un certificat numérique (14) sont stockées dans ladite zone de mémoire ou dans une autre zone de mémoire du support d'enregistrement amovible (12), et
comportant une unité de traitement de données (18) à laquelle le support d'enregistrement amovible (12) est connecté par l'intermédiaire d'une liaison de transmission de données, **caractérisé en ce que** les données d'identification et les données du certificat numérique (14) sont transmises du support d'enregistrement amovible (12) à l'unité de traitement de données (18), et
**en ce que** l'unité de traitement de données (18) traite les données d'identification et les données du certificat numérique et authentifie l'utilisateur,
**en ce que** la transmission de données de l'unité de traitement de données (18) au support d'enregistrement amovible (12) et/ou la transmission d'autres données du support d'enregistrement amovible (12) à l'unité de traitement de données (18) ne sont rendues possibles qu'après que l'authentification de l'utilisateur est réussi, et
**en ce qu'**une clé publique d'une paire de clés asymétriques de l'utilisateur à l'aide de laquelle des données sont cryptées est certifiée à l'aide du certificat (14), lesquelles données peuvent être décryptées au moyen de la clé privée de la paire de clés, dans lequel des données sont transmises de manière cryptée de l'unité de traitement de données (18) au support d'enregistrement amovible (12) à l'aide de la clé publique certifiée.

2. Système selon la revendication 1, **caractérisé en ce que** l'utilisateur est identifié et **en ce que** l'utilisateur identifié est authentifié, et **en ce que**, pour l'utilisateur et/ou un groupe d'utilisateurs auquel appartient l'utilisateur, des droits sont prédéfinis, lesquels droits sont activés pour ledit utilisateur par l'authentification de l'utilisateur.

3. Système selon l'une quelconque des revendications précédentes, **caractérisé en ce que** l'utilisateur est identifié par la fourniture en entrée d'un nom d'utilisateur, par le numéro de série du support de données amovible (12) et/ou par le certificat (14).

4. Système selon l'une quelconque des revendications précédentes, **caractérisé en ce que** le certificat (14) est un certificat d'attribut, dans lequel les données d'identification et/ou un mot de passe sont utilisés en tant qu'attributs qui sont liés par un organisme de certification (44, 46) à un certificat (14), dans lequel le certificat d'attribut se réfère de préférence à l'attribut ou aux attributs et à un autre certificat.

5. Système selon l'une quelconque des revendications précédentes, **caractérisé en ce que** l'unité de traitement de données (18) vérifie la validité et/ou l'authenticité du certificat (14).

6. Système selon l'une quelconque des revendications précédentes, **caractérisé en ce que** des données d'identification de fabricant et un code d'information de numéro de série sont stockés dans la zone de mémoire du support d'enregistrement amovible (12) en tant que données d'identification, dans lequel les données d'identification de fabricant et le code d'information de numéro de série sont de préférence des attributs du certificat (14).

7. Système selon l'une quelconque des revendications précédentes, **caractérisé en ce que** l'unité de traitement de données (18) fait partie d'un appareil de transaction de fonds, dans lequel l'appareil de transaction de fonds est de préférence un guichet automatique de versement d'argent, un guichet automatique de distribution d'argent, un automate de recyclage d'argent, un système de caisse automatique et/ou un système de caisse enregistreuse.

8. Système selon l'une quelconque des revendications précédentes, **caractérisé en ce que** le certificat (14) présente une durée de validité fixe et **en ce que** le certificat (14) devient invalide et n'est plus accepté par l'unité de traitement de données (18) lorsque la durée de validité s'est écoulée.

9. Système selon l'une quelconque des revendications précédentes, **caractérisé en ce que** le support d'enregistrement amovible (12) est un disque dur externe et/ou une mémoire flash externe, dans lequel le support d'enregistrement amovible (12) peut être relié par l'intermédiaire d'une liaison de données, de préférence par l'intermédiaire d'une interface standard (20), à l'unité de traitement de données (18), dans lequel l'interface standard (20) est de préférence une interface USB et la mémoire flash est de préférence une carte mémoire et/ou une mémoire USB enfichable.

10. Système selon l'une quelconque des revendications précédentes, **caractérisé en ce que** les données d'identification sont stockées par le fabricant dans une zone de mémoire ne pouvant plus être modifiée ultérieurement du support d'enregistrement amovible (12), de préférence lors de son processus de fabrication, en tant que données à lecture seule, et **en ce que** les données du certificat sont stockées dans une autre zone de mémoire réinscriptible du support de stockage amovible (12) dans lequel lesdites autres données peuvent être stockées.

11. Système selon l'une quelconque des revendications précédentes, **caractérisé en ce que** l'unité de traitement de données (18) vérifie si l'utilisateur est autorisé à activer une fonction fournie par un programme de l'unité de traitement de données (18) et **en ce que** la fonction n'est activée et/ou n'est exécutée par l'unité de traitement de données (18) qu'après qu'une vérification a réussi.

12. Système selon l'une quelconque des revendications précédentes, **caractérisé en ce qu'**une instance d'enregistrement traite une demande conformément à un certificat et vérifie la demande, dans lequel un processus de certification est autorisé après une vérification réussie.

13. Procédé d'authentification d'un utilisateur, dans lequel des données d'authentification destinées à identifier le support d'enregistrement amovible (12) sont stockées dans au moins une zone de mémoire d'un support d'enregistrement amovible (12), et
dans lequel des données d'un certificat numérique (14) sont stockées dans la zone de mémoire ou dans une autre zone de mémoire du support d'enregistrement amovible (12),
**caractérisé en ce que** les données d'identification et les données du certificat numérique sont lues depuis la zone de mémoire du support d'enregistrement amovible (12), et sont transmises par l'intermédiaire d'une liaison de transmission de données à une unité de traitement de données (18),
**en ce que** les données d'identification et les données du certificat numérique (14) sont traitées à l'aide de l'unité de traitement de données (18) et sont utilisées pour authentifier l'utilisateur,
**en ce que** la transmission de données de l'unité de traitement de données (18) au support d'enregistrement amovible (12) et/ou la transmission d'autres données du support d'enregistrement amovible (12) à l'unité de traitement de données (18) n'est rendue possible qu'après que l'authentification a réussi, et
**en ce qu'**une clé publique d'une paire de clés asymétriques de l'utilisateur est certifiée à l'aide du certificat (14), clé à l'aide de laquelle on crypte les données sont cryptées, lesquelles données peuvent être décryptées au moyen de la clé privée de la paire de clés, dans lequel des données sont transmises de manière cryptée de l'unité de traitement de données (18) au support d'enregistrement amovible (12) à l'aide de la clé publique certifiée.
